**Europäisches Patentamt**

**European Patent Office**

**Office européen des brevets**

(19)

(11) Veröffentlichungsnummer: **0 112 409**
**B1**

(12) # EUROPÄISCHE PATENTSCHRIFT

(45) Veröffentlichungstag der Patentschrift:
16.03.88

(51) Int. Cl.⁴: **H 04 H 3/00,** H 04 B 7/26,
H 04 Q 7/04

(21) Anmeldenummer: **82201641.6**

(22) Anmeldetag: **21.12.82**

(54) **Funkübertragungsverfahren für ein Mobilfunksystem.**

(43) Veröffentlichungstag der Anmeldung:
**04.07.84 Patentblatt 84/27**

(45) Bekanntmachung des Hinweises auf die Patenterteilung:
**16.03.88 Patentblatt 88/11**

(84) Benannte Vertragsstaaten:
**CH DE FR GB IT LI SE**

(56) Entgegenhaltungen:
**EP-A-0 020 893**
**DE-A-2 056 349**
**DE-A-2 443 816**
**DE-A-2 625 475**
**DE-A-2 631 517**
**DE-A-2 739 561**
**DE-C-867 876**

**BBC BROWN BOVERI REVIEW, Band 67, Nr. 7, Juli
1980, Seiten 415-418, Baden, CH; R.JAUCH et al.:
"Single-channel radiotelephone systems for the
energy distribution sector"**
**IBM TECHNICAL DISCLOSURE BULLETIN, Band 25,
Nr. 1, Juni 1982, Seiten 407-408, New York, USA;
D.E.HEINS: "Simulcast system receiver capture
ratio improvement"**
**PATENTS ABSTRACTS OF JAPAN, Band 5, Nr.
153(E-76)(825), 26. September 1981 & JP-A-56 85942**

(73) Patentinhaber: **BBC Brown Boveri AG, CH- 5401
Baden (CH)**

(72) Erfinder: **Stangl, Horst, Sommerhaldenstrasse 42,
CH- 5200 Brugg (CH)**

## Beschreibung

Die Erfindung betrifft ein Funkübertragungsverfahren für ein Mobilfunksystem mit geringem Trägerfrequenzaufwand gemäss dem Oberbegriff des Anspruchs 1.

Ein solches Funkübertragungsverfahren ist beispielsweise als Gleichkanalfunk aus der Druckschrift DE-AS-1 230 471 bekannt. Darin werden die Basisstationen senderseitig mit im gleichen Kanal liegenden Trägerfrequenzen betrieben, die sich bei benachbarten Basisatationen um einen geringen Trägerfrequenzversatz unterscheiden und synchron mit den aus der Zentrale kommenden Niederfrequenzsignalen moduliert werden. Die Basisstationen sind dabei so angeordnet, dass sich ihre Funkversorgungsbereiche überlappen und zusammen eine vorbestimmte Fläche abdecken, in deren Bereich eine Funkverbindung zwischen der Zentrale und einer Mobilstation aufgebaut werden kann.

Ein solcher echter Gleichwellenfunk benötigt zwar nur eine einzige Trägerfrequenz für ein grösseres Funkversorgungsgebiet, jedoch kommt es in den Grenzzonen zwischen benachbarten Funkversorgungsbereichen aufgrund von Interferenzeffekten zu Störungen in der Funkverbindung, die nur mit erheblichem, zusätzlichen Aufwand hinsichtlich Synchronisation durch Laufzeitausgleich und Frequenzstabilität der Basisstationen auf ein tolerierbares Mass reduziert werden können. Darüber hinaus führt der gleichzeitige Betrieb aller Basisstationen zu einem unnötig hohen Energieverbrauch, der in den Fällen unerwünscht sein kann, in denen für die Basisstationen aus betriebstechnischen Gründen nur eine Stromversorgung mit begrenzter Leistung zur Verfügung steht.

Durch die Druckschrift DE-A-26 25 475 ist ein Funkübertragungsverfahren für ein Mobilfunksystem bekannt, bei dem zum Aufbau einer Funkverbindung zwischen einer Zentrale und einer Mobilstation wenigstens zwei Basisstationen mit nebeneinanderliegenden Funkversorgungsbereichen verwendet werden, welche Basisstation einen Sender und einen Empfänger enthalten und mit der Zentrale niederfrequente Signale austauschen, bei dem zum Aufbau einer Funkverbindung zwischen der Mobilstation und der Zentrale eine Basisstation ausgewählt wird, wobei die Auswahl der Basisstation durch die Mobilstation selbst erfolgt, und bei dem zur Auswahl der Basisstation in einem Suchzyklus die Basisstationen nacheinander von der Mobilstation angerufen werden. Allerdings arbeitet dieses Verfahren weder frequenz- noch energieökonomisch, ist doch jeder Basisstation eine eigene Trägerfrequenz zugeordnet und bleiben deren Sender doch ständig in Betrieb.

Die Druckschrift DE-A1-24 43 816 offenbart ein Verfahren zur Funkversorgung längs von Transportwegen, bei dem jeweils nur eine Feststation mit der Mobilstation in Funkverbindung steht. Die Feststationen, welche senden, werden entweder auf Veranlassung des Dispatchers eingeschaltet, oder in Abhängigkeit von der Empfangsstärke des von der Mobilstation kommenden Signals durch die Feststationen selbst. Da die Wahl der Feststation nicht von der Mobilstation getroffen wird, wird die Empfangsqualität am Ort der Mobilstation völlig ausser acht gelassen.

Der vorliegenden Erfindung liegt daher die Aufgabe zugrunde, ein Funkübertragungsverfahren zu schaffen, das bei geringem Trägerfrequenzaufwand gleichzeitig die funktechnischen Schwierigkeiten des Gleichkanalfunks vermeidet und mit reduzierten Anlage- und Betriebskosten realisiert werden kann.

Die Aufgabe wird dadurch gelöst, dass bei einem Funkübertragungsverfahren der eingangs genannten Art die Merkmale aus dem Kennzeichen des Anspruchs 1 vorgesehen sind. Daraus ergibt sich der besondere Vorteil, dass bei einer bestehenden Funkverbindung jeweils nur der Sender einer Basisstation voll betrieben wird und Leistung verbraucht, die Basisstationen sich untereinander nicht störend beeinflussen und immer eine für den jeweiligen Standort der Mobilstation günstige Basisstation ausgewählt wird.

Das erfindungsgemässe Verfahren wird nachfolgend in einem Ausführungsbeispiel anhand der Zeichnung beschrieben und näher erläutert.

Es zeigen:

Fig. 1 den prinzipiellen Aufbau eines Mobilfunksystems zur Durchführung des erfindungsgemässen Verfahrens;

Fig. 2 das Blockschaltbild einer Mobilstation gemäss Fig. 1.

Fig. 3 das Blockschaltbild einer Basisstation gemäss Fig. 1;

Fig. 4 das Blockschaltbild einer Zentrale gemäss Fig. 1;

Fig. 5 die Anordnung und Signalverteilung bei mehreren Basisstationen in einem grösseren Funkversorgungsgebiet.

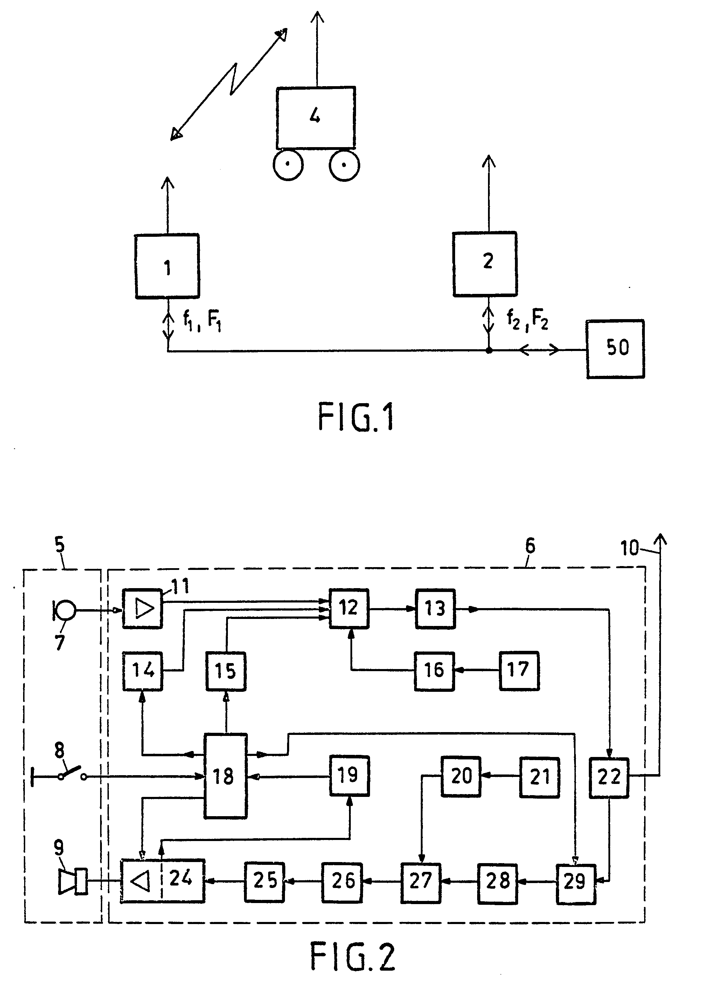

In Fig. 1 ist der prinzipielle Aufbau eines Mobilfunksystems dargestellt, wie es zur Durchführung des erfindungsgemässen Verfahrens verwendet werden kann. Es besteht aus wenigstens einer Mobilstation 4, die als Sende-/Empfangsgerät ausgebildet ist, und mindestens zwei Basisstationen 1 und 2, die ebenfalls Sender und Empfänger besitzen und gemeinsam mit einer Zentrale 50 verbunden sind, mit der sie z. B. über eine 4-Draht-Leistung plus Signalisierung (Omnibuskanal) oder eine Richtfunkstrecke niederfrequente Signale austauschen können.

Die beiden Basisstationen 1 und 2 haben nach Massgabe ihrer Sendeleistung bestimmte Funkversorgungsbereiche, d.h. begrenzte Gebiete, in denen eine Funkverbindung mit der beweglichen Mobilstation 4 möglich ist. Die Funkversorgungsbereiche sind zweckmässigerveise so nebeneinander angeordnet, dass sich insgesamt ein grösseres, zusammenhängendes Funkversorgungsgebiet ergibt, in dem eine Funkverbindung zwischen der Mobilstation 4 und der Zentrale 50 lückenlos aufrechterhalten werden kann. Dies wird durch ein Überlappen benachbarter Funkversorgungsbereiche erreicht. Die aus dem Gleichkanalfunk bekannten Interferenzstörungen in den Überlappungsbereichen treten hier jedoch nicht auf, weil bei einer bestehenden Funkverbindung nur der Sender derjenigen Basisstation getastet wird, die aufgrund der günstigen Lage zur Mobilstation 4 von dieser ausgewählt worden ist.

Befindet sich die Mobilstation 4 z. B. im Funkversorgungsbereich der Basisstation 1, fällt dort das HF-Signal der Basisstation mit einer wesentlich grösseren Feldstärke ein, als ein vergleichbares Signal der Basisstation 2. Dieser Unterschied in den einfallenden Feldstärken kann ausgenutzt werden, um für den jeweiligen Standort der Mobilstation 4 die funktechnisch günstigere von mehreren Basisstationen auszuwählen. Im Überlappungsbereich zweier Basisstationen, in dem annähernd gleiche Feldstärken herrschen und daher ein auf die Feldstärke bezogenes Auswahlkriterium nicht sinnvoll ist, wird für die Funkverbindung mit der Zentrale 50 diejenige Basisstation benutzt, die bei dem Auswahlvorgang von der Mobilstation 4 zuerst abgefragt worden ist. Dieses Vorgehen wird dadurch gerechtfertigt, dass im Überlappungsbereich beide angrenzenden Basisstationen in bezug auf die Qualität der Funkverbindung gleichwertig sind.

Da die Mobilstation 4 im gesamten, aus den einzelnen Funkversorgungsbereichen zusammengesetzten Funkversorgungsgebiet beweglich ist, ist es von Vorteil, eine automatische Umschaltung der Funkverbindung von einer Basisstation auf eine andere vorzusehen, wenn die Mobilstation 4 von einem Funkversorgungsbereich in einen anderen wechselt. Dies wird dadurch erreicht, dass die Tastung des Senders einer Basisstation durch ein Signal von der Mobilstation 4 gesteuert wird, und bei Unterbrechung einer bestehenden Funkverbindung erneut eine Basisstation ausgewählt wird.

Der Sender einer Basisstation wird immer dann getastet, wenn die Basisstation das Steuersignal von der Mobilstation 4 empfängt. Verlässt jedoch die Mobilstation 4 den Funkversorgungsbereich derjenigen Basisstation, deren Sender aufgrund des Steuersignals gerade getastet ist, wird auch das Steuersignal nicht mehr empfangen und das Tastkriterium fällt ab. Der Sender gibt dann keine HF-Leistung mehr ab. Dadurch wird in der Mobilstation angezeigt, dass die Funkverbindung unterbrochen ist und anschliessend unmittelbar ein neuer Auswahlvorgang für eine Basisstation eingeleitet.

Die Auswahl der Basisstation erfolgt vorzugsweise in einem Suchzyklus, in dem die Basisstationen 1 und 2 nacheinander von der Mobilstation 4 angerufen werden und der Sender einer angerufenen Basisstation zur Quittierung eines empfangenen Anrufs getastet wird. Solange sich die Mobilstation 4 während des Suchzyklus ausserhalb des Funkversorgungsbereiches einer Basisstation befindet, kann diese Basisstation den Anruf nicht empfangen. Ihr Sender wird nicht getastet und gibt damit auch keine Quittung an die anrufende Mobilstation ab. Ist daher nach einer vorbestimmten Zeitspanne der Anruf einer Basisstation nicht quittiert worden, weiss der mobile Teilnehmer bzw. die Mobilstation 4, dass eine Funkverbindung über diese Basisstation nicht möglich ist. Der Suchzyklus wird dann mit dem Anruf an die nächste Basisstation fortgesetzt.

Sobald der Anruf jedoch in einer Basisstation empfangen wird, wird automatisch der Sender dieser Basisstation getastet. Das ausgesendete HF-Signal wird von der Mobilstation 4 empfangen und damit die Möglichkeit einer Funkverbindung über diese Basisstation bestätigt. Daraufhin wird der Suchzyklus gestoppt und der Funkverkehr über diese zuletzt angerufene Basisstation abgewickelt.

Mit dem beschriebenen Auswahlverfahren ist zwar der Aufbau einer Funkverbindung grundsätzlich gewährleistet, wann immer eine Verbindung überhaupt möglich ist. Liegt dagegen die Mobilstation 4 in den Funkversorgungsbereichen mehrerer Basisstationen, d.h. sind mehrere Funkverbindungen meist unterschiedlicher Übertragungsqualität möglich, wird nach dem beschriebenen Verfahren diejenige von den möglichen Basisstationen ausgewählt, die innerhalb des Suchzyklus als erste angerufen wird. Um jedoch bei dem Auswahlverfahren auch die einfallende HF-Feldstärke der empfangenen Basisstationen am Ort der Mobilstation 4 zu berücksichtigen, wird bei einer bevorzugten Ausgestaltung der Erfindung zunächst ein erster Suchzyklus mit reduzierter HF-Empfindlichkeit im Empfänger der Mobilstation 4 durchlaufen. Aufgrund dieser Dämpfung verden dann in dem ersten Suchzyklus die Quittierungen angerufener, aber schwächer einfallender Basisstationen nicht empfangen, so dass nur eine Basisstation mit hoher einfallender HF-Feldstärke ausgewählt wird.

Befindet sich jedoch die Mobilstation 4 während des ersten Suchzyklus gerade im Überlappungsgebiet mehrerer Funkversorgungsbereiche, fallen die HF-Signale der entsprechenden Basisstationen annähernd gleich schwach ein. Daher wird zunächst im allgemeinen keine dieser Basisstationen ausgewählt. In diesem Fall wird der erste Suchzyklus ohne Auswahl abgeschlossen. Nach dem ersten wird dann ein weiterer Suchzyklus mit voller HF-Empfindlichkeit der Mobilstation 4 eingeleitet, der dann zur Auswahl einer schwächer einfallenden Basisstation führt. Wird dagegen auch in diesem weiteren Suchzyklus der Anruf von keiner Basisstation quittiert, weil sich z. B. die Mobilstation 4 ausserhalb des Funkversorgungsgebietes befindet oder das Funksystem durch eine andere Mobilstation belegt ist, wird das Auswahlverfahren nicht weitergeführt und dem mobilen Teilnehmer angezeigt, dass zur Zeit keine Funkverbindung mit der Zentrale 50 möglich ist.

Besonders günstig ist es für das Auswahlverfahren, jeder der Basisstationen 1 und 2 ein entsprechendes, niederfrequentes Rufsignal $f_1$ und $f_2$ zuzuordnen. Diese Rufsignale $f_1$ und $f_2$ können z. B. Tonsignale unterschiedlicher Frequenz sein, die zum Anrufen einer Basisstation einzeln, auf einen HF-Träger aufmoduliert, von der Mobilstation 4 ausgesendet werden. Ein solches Rufsignal wird dann von der zugeordneten Basisstation empfangen und mit geeigneten, selektiven Mitteln detektiert. Sobald eine Basisstation das ihr zugeordnete Rufsignal detektiert hat, wird der Sender dieser Basisstation getastet, um den Empfang des Rufsignals zu quittieren und damit den laufenden Suchzyklus in der Mobilstation 4 abzubrechen. Selbstverständlich können auch andere Rufsignale, z. B. solche, bei denen die Unterscheidung mittels einer digitalen Kodierung erfolgt, zur Anwendung gelangen.

Die Blockschaltbilder geeigneter Gerätekonfigurationen, wie sie zur Durchführung des beschriebenen Funkübertragungsverfahrens verwendet werden können, sind in den Figuren 2, 3 und 4 dargestellt. Fig. 2 zeigt das Blockschaltbild einer Mobilstation. Diese ist aufgeteilt in einen Handapparat 5, der ein Mikrophon 7, einen Lautsprecher 9 und einen Gabelkontakt 8 enthält, sowie ein Funkgerät 6, das die wesentlichen elektrischen Baugruppen umfasst und in einen Sende-, einen Empfangs- und einen Steuerteil aufgegliedert werden kann. Weitere Ergänzungen, z. B. mit Datenquellen und Datensenken, sind möglich, in der Fig. 2 jedoch nicht gezeigt.

Der Sendeteil besteht aus einem Modulator 12, der mit seinem Ausgang eine Senderendstufe 13 aussteuert, die wiederum über eine für den Duplexbetrieb geeignete Duplexweiche 22 mit einer Antenne 10 verbunden ist. Der Modulator 12 besitzt einen Eingang für die Trägerfrequenz, die von einem Senderoszillator 17 mit einem nachgeschalteten, ersten Vervielfacher 16 erzeugt wird, und weitere Eingänge für ein Sprachsignal, ein Rufsignal und ein Selektivrufsignal. Das Sprachsignal wird im Mikrofon 7 erzeugt und über einen Verstärker 11 an den entsprechenden Eingang des Modulators 12 gelegt. Das Rufsignal stammt aus einem Tongenerator 14, das Selektivrufsignal aus einem vergleichbaren Selektivrufgeber 15.

Der Empfangsteil setzt sich zusammen aus einer HF-Vorstufe 28, in die über die Duplexweiche 22 und ein variables Dämpfungsglied 29 die Antennenspannung eingespeist wird, einer Mischstufe 27, einem ZF-Verstärker 26 und einem Demodulator 25. In der Mischstufe 27 wird die modulierte Trägerfrequenz aus der HF-Vorstufe 28 mit einer Hilfsfrequenz aus einem Empfängeroszillator 21 mit einem nachgeschalteten, zweiten Vervielfacher 20 in der üblichen Weise gemischt. Das demodulierte NF-Signal wird von Demodulator 25 über eine mit einem Verstärker kombinierte Squelchschaltung 24 auf den Lautsprecher 9 des Handapparates 5 gegeben. Der Steuerteil besteht aus einer zentralen Steuerlogik 18, die einerseits von dem Gabelkontakt 8 und einer Selektivrufausweteschaltung 19 Steuerbefehle erhält, und andererseits Steuerbefehle an den Tongenerator 14, den Selektivrufgeber 15, das variable Dämpfungsglied 29 und die Squelchschaltung 24 gibt. Die Steuerlogik 18 steuert die automatische Aufnahme der Funkverbindung, ihre Aufrechterhaltung und ihre Auflösung. Das Abheben des Handapparates 5, d.h. das Schliessen des Gabelkontaktes 8, oder aber das Erkennen eines Selektivrufes von der Zentrale 50 durch die Selektivrufausweteschaltung 19 bewirken, dass der Sender der Mobilstation 4 getastet wird und der Tongenerator 14 von der Steuerlogik 18 den Befehl erhält, den Sender mit einer ersten Frequenz $f_1$ zu modulieren. Gleichzeitig wird von der Steuerlogik 18 das variable Dämpfungsglied 29 auf eine hohe Dämpfung eingestellt, die beispielsweise 26 dB betragen kann.

Mit der Aussendung des Rufsignals $f_1$ beginnt der erste Suchzyklus zur Auswahl einer funktechnisch günstig gelegenen Basisstation. Wird dieser Anruf von der zugeordneten Basisstation 1 nicht quittiert, indem der Sender der Basisstation 1 getastet wird, werden jeweils nach bestimmten Wartezeiten hintereinander weitere Basisstationen mit den ihnen zugeordneten Frequenzen bzw. Rufsignalen angerufen. Ist dieser Suchzyklus beendet, ohne dass eine Quittierung erfolgt ist, wird die Dämpfung am variablen Dämpfungsglied 29 durch die Steuerlogik 18 reduziert, also beispielsweise auf 0 dB gesetzt. Dann beginnt ein weiterer Suchzyklus wiederum mit dem Rufsignal $f_1$. Wird auch dieser veitere Suchzyklus ohne die Quittierung von einer Basisstation beendet, wird in der Mobilstation 4 dem mobilen Teilnehmer durch ein optisches oder akustisches Signal mitgeteilt, dass keine Verbindung mit der Zentrale 50 zustandegekommen ist.

Sobald jedoch das HF-Signal einer Basisstation während eines Suchzyklus als Quittierung empfangen wird, stoppt die von der Steuerlogik gesteuerte Frequenzumschaltung, so dass während der ganzen Zeit, in welcher sich die Mobilstation 4 im Funkversorgungsbereich derselben Basisstation befindet, die zuletzt erzeugte Tonfrequenz mit dem Gespräch übertragen wird. Wenn dies schon im ersten Suchzyklus geschieht, wird bereits zu diesem Zeitpunkt die Dämpfung am variablen Dämpfungsglied 29 auf 0 dB reduziert. Wenn mit der Frequenzumschaltung auch der Suchzyklus gestoppt worden ist, erhält die Squelchschaltung 24 von der Steuerlogik 18 den Befehl, die Stummschaltung des Lautsprechers 9, die während eines ablaufenden Suchzyklus besteht, aufzuheben und damit den NF-Teil des Empfängers für ein nachfolgendes Gespräch freizugeben.

Die Selektivrufausweteschaltung 19 detektiert aus dem demodulierten NF-Signal des Demodulators 25 einen Selektivruf, welcher von der Zentrale 50 ausgesendet wird und als Anrufsignal für eine ausgewählte Mobilstation 4 dient. Wird ein solcher Selektivruf empfangen, leitet die Steuerlogik 18, wie beim Schliessen des Gabelkontaktes 8, den ersten Suchzyklus zur Auswahl einer geeigneten Basisstation ein. Darüber hinaus erhält in diesem Fall der Selektivrufgeber 15 den Befehl, einen Selektivruf zur Quittierung in den Modulator 12 einzugeben. Dieser Selektivruf der Mobilstation 4 wird in der Zentrale 50 empfangen und ausgewertet. Dadurch weiss die Zentrale, dass der mobile Teilnehmer erreicht worden ist. Wenn in einer bestehenden Funkverbindung das Gespräch von der Zentrale 50 aus zuerst beendet werden soll, wird von dort ein Schlussruf übertragen. Dieser Schlussruf wird wiederum von der Selektivrufausweteschaltung 19 erkannt, was bewirkt, dass der Sender in der Mobilstation 4 ausgeschaltet und die Steuerlogik 18 in ihren Ausgangszustand zurückgesetzt werden. Von der Seite des mobilen Teilnehmers wird das Gespräch dadurch zuerst beendet, dass beim Auflegen des Handapparates 5 der Gabelkontakt 8 wieder geöffnet wird.

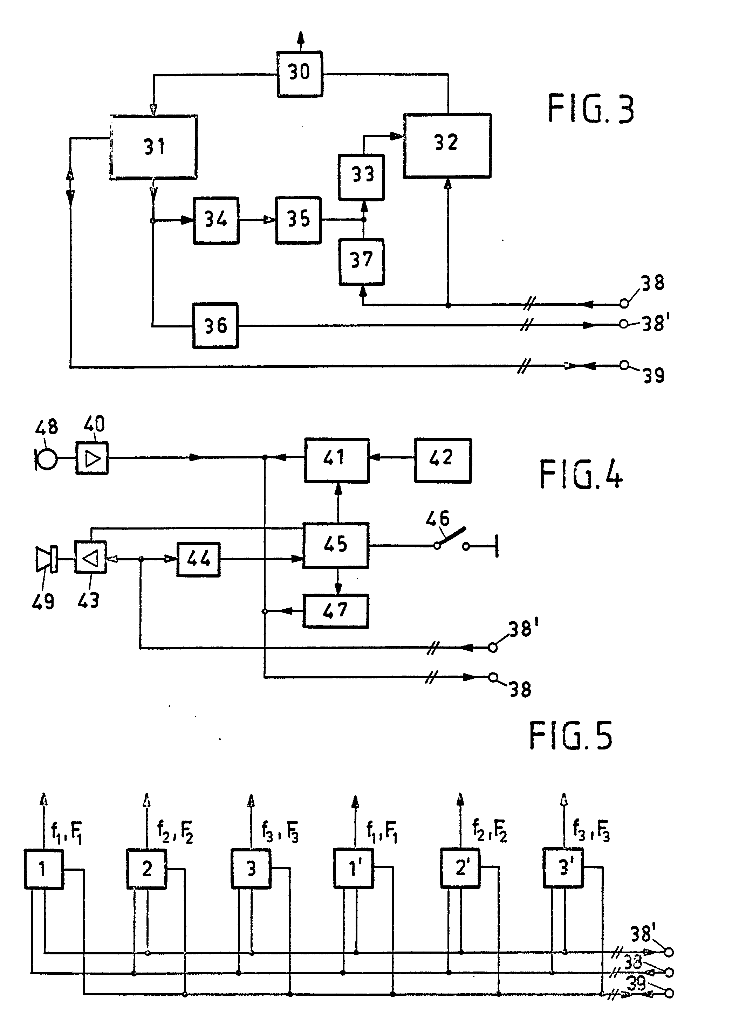

In Fig. 3 ist der prinzipielle Aufbau einer für das erfindungsgemässe Funkübertragungaverfahren geeigneten Basisstation in Form eines Blockschaltbildes dargestellt. Im wesentlichen besteht die Basisstation aus einem Sender 32, einem Empfänger 31 und einer Frequenzweiche 30, über die der Sender 32 und der Empfänger 31 mit einer Antenne verbunden sind. Der Empfänger 31 ist weiterhin über einen Hochpass 36 und eine abgehende, üblicherweise zweiadrige NF-Leitung 38' mit der Zentrale 50 verbunden. Eine von der Zentrale kommende NF-Leitung 38 führt einerseits direkt zum Sender 32, andererseits indirekt über eine erste Tonauswerteschaltung 37 und ein nachfolgendes Zeitglied 33. Ebenfalls über das Zeitglied 33 zum Sender 32 führt eine Verbindungsleitung vom Empfänger 31, in die eine zweite Tonauswerteschaltung 35 mit einem vorgeschalteten Tiefpass 34 eingefügt ist.

Am Ausgang des Empfängers 31 erscheint das demodulierte NF-Signal, welches von der Mobilstation 4 ausgesendet worden ist. Es enthält neben dem Audiosignal auch das der Basisstation zugeordnete Rufsignal, das parallel zum Gespräch übertragen wird. Als Rufsignale $f_1$ und $f_2$ werden vorteilhafterweise Tieftonsignale

verwendet, deren Frequenzen ausserhalb des für die Sprachsignale benutzten Frequenzbandes liegen. Die Rufsignalfrequenzen können z. B. 190, 210 oder 230 Hz betragen. Der Tiefpass 34 und der Hochpass 36 sind mit ihren Grenzfrequenzen so gewählt und aufeinander abgestimmt, dass mit ihrer Hilfe Audiosignal und Rufsignal voneinander getrennt werden können. Das höherfrequente Audiosignal passiert den Hochpass 36 ohne nennenswerte Schwächung und wird über die NF-Leitung 38' an die Zentrale 50 weitergeleitet. Der Tiefpass 34 blockiert das Audiosignal, führt jedoch die Rufsignale $f_1$ und $f_2$ der zweiten Tonauswerteschaltung 35 zu, die auf das der Basisstation zugeordnete Rufsignal abgestimmt ist und anspricht. Die Tonauswerteschaltung 35 steuert die Tastung des Senders 32. Das Zeitglied 33 mit seiner vorgegebenen Verzögerungszeit bewirkt, dass der Sender 32 noch eine gewisse Zeit eingeschaltet bleibt, wenn das Tastkriterium abfällt.

Es ist jedoch auch möglich, den Sender 32 einer Basisstation von der Zentrale 50 aus zu aktivieren, indem vor der Informationsübertragung ein Steuersignal mit der Frequenz $F_1$ oder $F_2$ über die NF-Leitung 38 geschickt wird. Auf dieses Steuersignal spricht die erste Tonauswerteschaltung 37 der zugeordneten Basisstation an und tastet über das Zeitglied 33 den Sender 32. Die Frequenz des Steuersignal $F_1$ oder $F_2$ liegt wegen des Frequenzganges des Omnibuskanals vorteilhafterweise im Bereich zwischen 300 Hz und 3300 Hz. Wie bei den Rufsignalen, so ist auch hier jeder Basisstation ein eigenes, unverwechselbares Steuersignal zugeteilt. Ebenso kann die Unterscheidung dieser Steuersignale statt durch ihre Frequenz durch geeignete Kodierung erfolgen.

Fig. 4 zeigt anhand des Blockschaltbildes den prinzipiellen Aufbau einer geeigneten Zentrale. Von einem Mikrophon 48 gelangen die Sprachsignale über einen ersten Verstärker 40 auf die NF-Leitung 38 zu den Basisstationen 1 und 2. Über dieselbe NF-Leitung werden auch der Selektivruf aus einem Selektivrufgeber 41 zur Auswahl einer bestimmten Mobilstation und das Steuersignal $F_1$ und $F_2$ aus einem Tongenerator 47 oder einer entsprechenden Kodiereinrichtung übertragen. Die Art des in dem Selektivrufgeber 41 erzeugten Selektivrufes wird durch einen Rufnummernwähler 42 bestimmt, an dem die Rufnummer einer Mobilstation eingestellt wird, mit der eine Funkverbindung aufgebaut werden soll. Die auf der NF-Leitung 38' ankommenden NF-Signale, die entweder einen Selektivruf als Quittung von einer Mobilstation, oder aber reine Sprach- oder Datensignale enthalten, werden entweder von einer Selektivrufausweteschaltung 44 verarbeitet oder über einen zweiten Verstärker 43 auf einen Lautsprecher 49 gegeben. Alternativ kann auch eine Datensenke in Frage kommen. Der Funktionsablauf in der Zentrale 50 während des Funkverkehrs wird, ähnlich wie in der Mobilstation gemäss Fig. 2, durch eine Steuerlogik 45 bestimmt, die Signale von der Signalauswerteschaltung 44 und einer Ruftaste 46 erhält und ihrerseits Befehle an den Selektivrufgeber 31, den zweiten Verstärker 43 und den Tongenerator 47 gibt.

Durch das Betätigen der Ruftaste 46 wird über die Steuerlogik 45 der Tongenerator 47 eingeschaltet. Das im Tongenerator erzeugte Steuersignal $F_1$ oder $F_2$ gelangt über die NF-Leitung 38 zu allen Basisstationen. Die Tonauswerteschaltung 37 derjenigen Basisstation, der dieses Steuersignal zugeordnet ist, spricht an und tastet den Sender 32. Nach einer kurzen Detektions- und Hochtastzeit des Senders wird in dem Selektivrufgeber 41 der Zentrale 50 ein Selektivruf erzeugt und über die NF-Leitung 38 direkt auf den Sender 32 der getasteten Basisstation gegeben und ausgesendet. Die Tastung wird in der dafür benötigten Zeitspanne durch das Zeitglied 33 gewährleistet. Empfängt eine Mobilstation ihren Selektivruf, antwortet sie mit einer Quittung. Die Selektivrufauswerteschaltung 44 in der Zentrale detektiert die Quittung und stoppt den Rufvorgang. War jedoch der Versuch erfolglos, d.h. wurde der mobile Teilnehmer nicht erreicht, wird der Rufvorgang mit einem anderen Steuerton, also über eine andere Basisstation, wiederholt. Wird nach einer vorbestimmten Anzahl von Versuchen der mobile Teilnehmer nicht erreicht, wird in der Zentrale 50 gemeldet, dass der gesuchte Teilnehmer nicht erreichbar ist.

In Fig. 5 ist die Anordnung und Zusammenschaltung mehrerer Basisstationen 1, 2, 3 und 1', 2', 3' dargestellt, die über die NF-Leitungen 38 und 38' mit der Zentrale 50 verschaltet sind. Eine solche Anordnung der Basisstationen ist zweckmässig, um beispielsweise die Funkversorgung in einem Gebiet entlang einer Bahnlinie oder Strasse sicherzustellen. Der Basisstation 1 sind, wie beschrieben, das Rufsignal $f_1$ und das Steuersignal $F_1$ zugeordnet. Eine entsprechende Zuordnung besteht zwischen den Basisstationen 2 und 3 und den Signalpaaren $f_2$, $F_2$ und $f_3$, $F_3$. Da aufgrund des begrenzten Funkversorgungsbereiches einer Basisstation die Gefahr einer Mehrfach-Funkverbindung gering ist, kann bereits die nächstfolgende Basisstation 1' wiederum mit dem Signalpaar $f_1$, $F_1$ belegt werden. Entsprechendes gilt für die Stationen 2' und 3'.

In einem solchen Mobilfunksystem wird wiederum die Verbindungsaufnahme von der Mobilstation 4 zur Zentrale 50, die beide in Fig. 5 nicht dargestellt sind, durch das Abnehmen des Handapparates 5 in der Mobilstation eingeleitet. Dadurch wird der Sender der Mobilstation getastet und zunächst mit dem Rufsignal $f_1$ moduliert. Befindet sich nun die Mobilstation im Empfangsbereich der Basisstationen 1 oder 1', so spricht in dieser Basisstation die Tonauswerteschaltung 35 an und tastet den Sender 32. Das quittierende HF-Signal des Senders 32 kann jedoch von der Mobilstation 4 nur dann empfangen werden, wenn die Feldstärke am Empfangsort relativ hoch ist, da das Signal im Empfänger abgeschwächt wird. Ist daher die Empfangsfeldstärke zu gering, werden weitere Versuche mit dem Rufsignal $f_2$ bzw. $f_3$ durchgeführt. Durch diese Methode wird erreicht, dass, wenn ein Versuch erfolgreich ist, die Funkverbindung über eine Basisstation erfolgt, welche von den Ausbreitungsbedingungen her optimal ist. Sind jedoch alle drei Versuche mit den Rufsignalen $f_1$, $f_2$ und $f_3$ negativ verlaufen, wird die Empfindlichkeit der Mobilstation 4 erhöht bzw. die Dämpfung reduziert. Dadurch wird die Verbindungsaufnahme auch in ausbreitungskritischen Gebieten gewährleistet.

Die Dämpfungsreduktion erfolgt auch dann, wenn im ersten Suchzyklus bereits eine Verbindung aufgebaut vorden ist, um die Reichweite während des Betriebs nicht unnötig zu verringern. Ist nun die Verbindung zwischen der Mobilstation 4 und einer Basisstation aufgebaut, sendet die Mobilstation einen Selektivruf aus, welcher in der Zentrale 50 einen Anrufton auslöst und damit anzeigt, dass die zugeordnete Mobilstation ein Gespräch führen möchte.

Die Verbindungsaufnahme in entgegengesetzter Richtung d.h., von der Zentrale 50 zur Mobilstation 4 wird durch das Drücken der Ruftaste 46 in der Zentrale eingeleitet. In bekannter Weise veranlasst die Steuerlogik 45 den Tongenerator 47, zunächst das Steuersignal $F_1$ zu erzeugen. Mittels dieses Steuersignals $F_1$ werden die Sender 32 der zugeordneten Basisstationen 1 und 1' getastet. Innerhalb der Verzögerungszeit der Zeitglieder 33 wird der Selektivruf des anzurufenden mobilen Teilnehmers gesendet. Quittiert die gesuchte Mobilstation den Anruf nach einer bestimmten Zeit nicht, werden weitere Versuche mit den Steuersignalen $F_2$ und $F_3$, aber demselben Selektivruf, über die Stationen 2, 2' und 3, 3' durchgeführt. Ist auch dies erfolglos, wird der Zyklus eine bestimmte Anzahl von Malen wiederholt, da es möglich sein kann, dass sich die Mobilstation kurzzeitig in einem ausbreitungsmässig ungünstigen Gebiet befunden hat. Detektiert sie jedoch ihren Selektivruf, beginnt sie ihrerseits mit dem ersten Suchzyklus zur Auswahl der günstigsten Basisstation.

Wie aus dem Gesagten hervorgeht, wird die Wahl der günstigen Basisstation in jedem Fall von der Mobilstation 4 durchgeführt. Ist dies geschehen, werden die Empfänger 31 aller anderen Basisstationen gesperrt. Die dazu benötigten Kriterien und Befehle werden zwischen den Basisstationen über eine gemeinsame Signalisierungsleitung 39 übertragen. Dadurch wird erreicht, dass, wenn das Funksystem mit einer bestehenden Verbindung belegt ist, ein anderer mobiler Teilnehmer nicht die Möglichkeit hat, eine Verbindung aufzubauen, was zu einer Störung für ein bestehendes Gespräch führen würde. Befindet sich jedoch dieser andere Teilnehmer gerade im Funkversorgungsbereich jener Basisstation, über welche die bestehende Verbindung läuft, könnte er dennoch Störungen hervorrufen, da der Empfänger 31 dieser Basisstation nicht gesperrt ist. Dies wird verhindert, indem die Sendetastung in der anderen Mobilstation durch das empfangene HF-Signal blockiert wird. Beide Massnahmen führen dazu, dass der Versuch einer Verbindungsaufnahme während einer schon bestehenden Verbindung erfolglos verläuft. Dies wird dem Teilnehmer durch ein Besetztzeichen mitgeteilt.

Verlässt nun die Mobilstation 4 im Verlauf eines Gesprächs mit der Zentrale 50 den Funkversorgungsbereich der ausgewählten Basisstation, kann diese ihr Rufsignal $f_1$, $f_2$ oder $f_3$ nicht mehr empfangen, was bewirkt, dass die Tastung des Senders 32 abfällt und gleichzeitig alle Empfänger 31 freigegeben werden. Da die Mobilstation 4 kein HF-Signal mehr empfängt, wird wie bei der Verbindungsaufnahme ein erster Suchzyklus zur erneuten Auswahl einer günstigen Basisstation gestartet. Der damit verbundene Ausfall der Funkverbindung ist sehr kurz und wirkt sich nicht störend auf die Gesprächsabwicklung aus, so dass im gesamten Funkversorgungsgebiet stets eine Funkverbindung von guter Übertragungsqualität zwischen Zentrale 50 und Mobilstation 4 möglich ist.

Insgesamt gesehen ist das beschriebene Verfahren ein besonders frequenzökonomisches Funkübertragungsverfahren zur Funkversorgung von grossflächigen Gebieten mit einer relativ geringen Anzahl von Funkteilnehmern. Dabei spielt es keine Rolle, ob es sich um ein Stern- oder Liniennetz handelt. Es ist selbstverständlich ebenso möglich, das Verfahren auch bei Mehrkanalsystemen anzuwenden, wenn dies durch die Anzahl der mobilen Teilnehmer erforderlich sein sollte. Ein weiterer Vorteil liegt darin, dass immer nur ein Sender bzw. eine Basisstation während der Gesprächsabwicklung getastet ist. Dies verursacht keine unnötige Abstrahlung von HF-Leistung und reduziert den benötigten Energiebedarf. Dieser Vorteil ist besonders relevant, wenn die Basisstationen mit Wind- oder Sonnenenergie betrieben werden.

## Patentansprüche

1. Funkübertragungsverfahren für ein Mobilfunksystem mit geringem Trägerfrequenzaufwand, bei dem zum Aufbau einer Funkverbindung zwischen einer Zentrale (50) und einer Mobilstation (4) wenigstens zwei Basisstationen (7, 2) mit nebeneinanderliegenden Funkversorgungsbereichen verwendet werden, welche Basisstationen (7, 3) einen Sender (32) und einen Empfänger (31) enthalten und mit der Zentrale (50) niederfrequente Signale austauschen, wobei zum Aufbau einer Funkverbindung zwischen der Mobilstation (4) und der Zentrale (50) eine Basisstation ausgewählt wird, die Auswahl der Basisstation durch die Mobilstation (4) selbst erfolgt, und zur Auswahl der Basisstation in einem Suchzyklus die Basisstationen (7, 2) nacheinander von der Mobilstation (4) angerufen werden, dadurch gekennzeichnet, dass der Sender (32) einer angerufenen Basisstation zur Quittierung eines empfangenen Anrufs getastet wird, und der Suchzyklus gestoppt und der nachfolgende Funkverkehr über die zuletzt angerufene Basisstation abgewickelt wird, wenn die Mobilstation (4) ein HF-Signal dieser Basisstation als Quittung empfangen hat, und dass bei bestehender Funkverbindung nur der Sender (32) der ausgewählten Basisstation getastet wird.

2. Verfahren nach Anspruch 1, dadurch gekennzeichnet, dass die Tastung des Senders (32) durch ein Signal von der Mobilstation (4) gesteuert wird und nach der Unterbrechung einer bestehenden Funkverbindung erneut eine Basisstation ausgewählt wird.

3. Verfahren nach Anspruch 1, dadurch gekennzeichnet, dass bei der Auswahl der Basisstation ein erster Suchzyklus mit reduzierter HF-Empfindlichkeit der Mobilstation (4) durchlaufen wird und ein weiterer Suchzyklus mit voller HF-Empfindlichkeit der Mobilstation (4) eingeleitet wird, wenn die Mobilstation (4) im ersten Suchzyklus kein HF-Signal einer Basisstation (1, 2) empfangen hat.

4. Verfahren nach Anspruch 1, dadurch gekennzeichnet, dass jeder Basisstation (1, 2) ein niederfrequentes Rufsignal ($f_1$, $f_2$) zugeordnet wird, dass in dem Suchzyklus eine Basisstation (1, 2) durch dieses Rufsignal ($f_1$, $f_2$) angerufen wird, welches Rufsignal ($f_1$, $f_2$) von der Mobilstation (4) ausgesendet und von der zugeordneten Basisstation (1, 2) detektiert wird und die Tastung des Senders (32) dieser Basisstation steuert.

5. Verfahren nach Anspruch 1, dadurch gekennzeichnet, dass zum Aufbau einer Funkverbindung von der Zentrale (50) ausgehend ein Selektivruf an die Mobilstation (4) abgesendet wird und die Mobilstation (4) beim Empfang dieses Selektivrufes den Empfang quittiert und die Auswahl einer Basisstation (1, 2) einleitet.

6. Verfahren nach Anspruch 5, dadurch gekennzeichnet, dass zum Absenden des Selektivrufes in einem Suchzyklus die Basisstationen (1, 2) nacheinander von der Zentrale (50) angerufen werden, von der jeweils angerufenen Basisstation aus der Selektivruf an die Mobilstation abgesendet wird und der Suchzyklus so oft wiederholt wird, bis die Mobilstation (4) den Empfang des Selektivrufs quittiert oder eine vorgegebene Zahl von Suchzyklen durchlaufen ist.

7. Verfahren nach Anspruch 6, dadurch gekennzeichnet, dass jeder Basisstation (1, 2) ein Steuersignal (F₁, F₂) zugeordnet wird und in dem Suchzyklus eine Basisstation (1, 2) von der Zentrale (50) durch das ihr zugeordnete Steuersignal angerufen wird.

8. Verfahren nach Anspruch 1, dadurch gekennzeichnet, dass nach dem Aufbau einer Funkverbindung zwischen der Mobilstation (4) und der Zentrale (50) über eine ausgewählte Basisstation die Empfänger (31) der übrigen Basisstationen gesperrt werden und die Mobilstation (4) ein Selektivruf zur Quittierung an die Zentrale (50) sendet.

9. Verfahren nach Anspruch 2, dadurch gekennzeichnet, dass automatisch eine neue Basisstation ausgewählt wird, wenn die Mobilstation (4) den Funkversorgungsbereich einer ausgewählten Basisstationen verlässt.

## Claims

1. Radio transmission method for a mobile radio system with little carrier frequency outlay, in which at least two base stations (1, 2) with adjacent radio coverage areas are used for setting up a radio link between a central station (50) and a mobile station (4), which base stations (1, 3) contain a transmitter (32) and a receiver (31) and exchange low-frequency signals with the central station (50), a base station being selected for setting up a radio link between the mobile station (4) and the central station (50), the base station being selected by the mobile station (4) itself, and the base stations (1, 2) being successively called by the mobile station (4) for selecting the base station in a search cycle, characterized in that the transmitter (32) of a called base station is keyed for acknowledging a received call and the search cycle is stopped and the subsequent radio traffic is handled via the base station last called when the mobile station (4) has received an RF signal of this base station as acknowledgement, and that only the transmitter (32) of the selected base station is keyed when the radio link has been set up.

2. Method according to Claim 1, characterized in that the keying of the transmitter (32) is controlled by a signal from the mobile station (4) and a base station is newly selected after an interruption of an existing radio link.

3. Method according to Claim 1, characterized in that, during the selection of the base station, a first search cycle with reduced RF sensitivity of the mobile station (4) is run and a further search cycle with full RF sensitivity of the mobile station (4) is initiated if the mobile station (4) has not received an RF signal of a base station (1, 2) in the first search cycle.

4. Method according to Claim 1, characterized in that a low-frequency call signal (f₁, f₂) is allocated to each base station (1, 2), that a base station (1, 2) is called by this call signal (f₁, f₂) in the search cycle, which call signal (f₁, f₂) is transmitted by the mobile station (4) and detected by the associated base station (1, 2) and controls the keying of the transmitter (32) of this base station.

5. Method according to Claim 1, characterized in that, for setting up a radio link coming from the central station (50), a selective call is transmitted to the mobile station (4) and the mobile station (4) when receiving this selective call, acknowledges reception and initiates the selection of a base station (1, 2).

6. Method according to Claim 5, characterized in that the base stations (1, 2) are successively called by the central station (50) in a search cycle for transmitting the selective call, the selective call is transmitted to the mobile station from the base station called in each case and the search cycle is repeated until the mobile station (4) acknowledges the reception of the selective call or a predetermined number of search cycles has been run.

7. Method according to Claim 6, characterized in that a control signal (F₁, F₂) is allocated to each base station (1, 2) and in the search cycle a base station (1, 2) is called by the central station (50) by means of the control signal allocated to it.

8. Method according to Claim 1, characterized in that, after a radio link has been set up between the mobile station (4) and the central station (50) via a selected base station, the receivers (31) of the remaining base stations are blocked and the mobile station (4) transmits a selective call as acknowledgement to the central station (50).

9. Method according to Claim 2, characterized in that a new base station is automatically selected when the mobile station (4) leaves the radio coverage area of a selected base station.

## Revendications

1. Procédé de transmission radioélectrique pour un système mobilophone à faible dépense de fréquence porteuse, dans lequel, pour établir une communication radioélectrique entre un central (50) et stations de base (1, 2) à zones de service radio accolées, les stations de base (1, 3) comprenant un émetteur (32) et un récepteur (31) et échangeant des signaux de basse fréquence avec le central (50), étant entendu que, pour établir une communication radio entre la station mobile (4) et le central (50), on sélectionne une station de base, la sélection de la station de base étant effectuée par la station mobile (4) elle même et, en vue de cette sélection de la station de base au cours d'un cycle de recherche, les stations de base (1, 2) sont appelées successivement par la station mobile (4), caractérisé en ce que l'émetteur (32) d'une station de base appelée est manipulé pour accuser réception de son appel reçu et le cycle de recherche est arrêté, tandis que le trafic radio suivant passe par la station de base appelée en dernier lieu lorsque la station mobile (4) a reçu un signal HF de cette station de base à titre d'accusé de réception et, lorsqu'une communication radioélectrique est établie, seul l'émetteur (32) de la station de base sélectionnée est manipulé.

2. Procédé suivant la revendication 1, caractérisé en ce que la manipulation de l'émetteur (32) est commandée par un signal de la station mobile (4) et, après l'interruption d'une communication radioélectrique existante, une station de base est à nouveau sélectionnée.

3. Procédé suivant la revendication 1, caractérisé en ce que, lors de la sélection de la station de base, un premier cycle de recherche à sensibilité HF réduite de la station mobile (4) est parcouru et un autre cycle de recherche à sensibilité HF complète de la station mobile (4) est amorcé lorsque la station mobile (4) n'a reçu aucun signal HF d'une station de base (1, 2) pendant le premier cycle de recherche.

4. Procédé suivant la revendication 1, caractérisé à ce qu'à chaque station de base (1, 2) est associé un signal d'appel de basse fréquence $(f_1, f_2)$, et, dans le cycle de recherche, une station de base (1,2) est appelé, par ce signal d'appel $(f_1, f_2)$, qui est émis par la station mobile, est détecté par la station de base (1, 2) associée et commande la manipulation de l'émetteur (32) de cette station de base.

5. Procédé suivant la revendication 1, caractérisé en ce que pour établir une communication radioélectrique au départ du central (50), un appel sélectif est émis vers la station mobile (4) et cette station mobile (4), à la réception de cet appel sélectif, en accuse réception et amorce la sélection d'une station de base (1, 2).

6. Procédé suivant la revendication 5, caractérisé en ce que pour émettre l'appel sélectif dans un cycle de recherche, les stations de base (1, 2) sont appelées successivement par le central (50), l'appel sélectif est émis par la station de base respectivement appelée vers la station mobile et le cycle de recherche est répété jusqu'à ce que la station mobile (4) accuse réception de l'appel sélectif ou qu'un nombre prédéfini de cycles de recherche ait été parcouru.

7. Procédé suivant la revendication 6, caractérisé en ce qu'à chaque station de base (1, 2) est attribue un signal de commande $(f_1, f_2)$ et, dans le cycle de recherche, une station de base (1, 2) est appelée par le central (50) par son signal de commande associé.

8. Procédé suivant la revendication 1, caractérisé en ce qu'après l'établissement d'une communication radioélectrique entre la station mobile (4) et le central (50), par l'intermédiaire d'une station de base sélectionnée, les récepteurs (31) des autres stations de base sont bloqués et la station mobile (4) émet un appel sélectif pour un accusé de réception vers le central (50).

9. Procédé suivant la revendication 2, caractérisé en ce qu'une nouvelle station de base est sélectionnée automatiquement lorsque la station mobile (4) quitte la zone de service radio d'une station de base sélectionnée.

FIG.1

FIG.2

FIG. 3

FIG. 4

FIG. 5